# EUROPÄISCHE PATENTANMELDUNG

(11) **EP 1 959 333 A1**
(43) Veröffentlichungstag der Anmeldung: **20.08.2008**
(21) Anmeldenummer: 08002929.1
(22) Anmeldetag: 18.02.2008
(51) Int. Cl.: G06F 1/32, G06K 19/077

(54) **Mikrosystem**

(30) Priorität: 16.02.2007 EP 07003299
(71) Anmelder: Micronas GmbH, 79108 Freiburg i. Br. (DE)
(72) Erfinder: Lehmann, Mirko, Dr. rer.nat, 9642 Ebnat-Kappel (CH)
(74) Vertreter: Huwer, Andreas

(57) **Zusammenfassung**

Ein Mikrosystem (1) besteht zumindest aus wenigstens einem Sensor (3) und/oder Aktuator, einer damit verbundenen Signalverarbeitungs- und/oder Ansteuereinrichtung (4), einem Zeitgeber (8) und einem elektrischen Energiespeicher (5) zur Stromversorgung zumindest der Signalverarbeitungs- und/oder Ansteuereinrichtung (4). Die Signalverarbeitungs- und/oder Ansteuereinrichtung (4) weist eine Betriebsartenumschalteinrichtung (6) auf, mittels der sie in einen Arbeitsmodus und einen Ruhemodus mit gegenüber dem Arbeitsmodus reduzierter Stromaufnahme bringbar ist. Die Betriebsartenumschalteinrichtung (6) hat mindestens einen Steuersignaleingang (7), der zum Anlegen eines Betriebsartenumschaltsignals mit dem Zeitgeber (8) elektrisch verbunden ist. Der Zeitgeber (8) ist ein mechanischer Zeitgeber (8)†, der mindestens einen mikromechanischen Cantilever (10) aufweist, der derart mit wenigstens einem, mit dem mindestens einen Steuersignaleingang (7) der Signalverarbeitungs- und/oder Ansteuereinrichtung (4) verbundenen elektrischen Element (9) gekoppelt ist, dass dieses zeitabhängig verstellt wird.

## Beschreibung

Die Erfindung betrifft ein Mikrosystem, bestehend zumindest aus wenigstens einem Sensor und/oder Aktuator, einer damit verbundenen Signalverarbeitungs- und/oder Ansteuereinrichtung und einem elektrischen Energiespeicher zur Stromversorgung zumindest der Signalverarbeitungs- und/oder Ansteuereinrichtung, wobei die Signalverarbeitungs- und/oder Ansteuereinrichtung eine Betriebsartenumschalteinrichtung aufweist, mittels der sie in einen Arbeitsmodus und einen Ruhemodus mit gegenüber dem Arbeitsmodus reduzierter Stromaufnahme bringbar ist, und wobei die Betriebsartenumschalteinrichtung mindestens einen Steuersignaleingang zum Anlegen eines Betriebsartenumschaltsignals aufweist.

Ein derartiges Mikrosystem, das als Sensor einen Temperatursensor aufweist, ist aus der Praxis bekannt. Es kann an einem Gegenstand, wie z.B. einer Tiefkühlkost, angebracht werden, um deren Temperatur zu überwachen. Das Mikrosystem hat einen Halbleiterchip, in den eine Signalverarbeitungseinrichtung, ein Datenspeicher und ein elektronischer Zeitgeber integriert sind. Der Halbleiterchip ist mit einer Batterie verbunden, die als Stromversorgung dient. Die Signalverarbeitungseinrichtung weist eine Betriebsartenumschalteinrichtung auf, mittels der sie zwischen einem Arbeitsmodus und einem Ruhemodus umschaltbar ist. Im Arbeitsmodus wird ein Temperaturmesswert aus dem Temperatursensor in die Signalverarbeitungseinrichtung eingelesen und in dieser verarbeitet. Das Ergebnis der Signalverarbeitung wird im Datenspeicher abgelegt. Danach wird die Signalverarbeitungseinrichtung mittels der Betriebsartenumschalteinrichtung in den Ruhemodus umgeschaltet, in dem keine Signalverarbeitung erfolgt. Dadurch ist die Stromaufnahme im Ruhemodus geringer als im Arbeitsmodus. Die Umschaltung von dem Ruhemodus in den Arbeitsmodus, das so genannte Aufwecken der Signalverarbeitungseinrichtung, erfolgt durch ein Betriebsartenumschaltsignal, das von dem Zeitgeber erzeugt und an einen Steuersignaleingang der Betriebsartenumschalteinrichtung angelegt wird. Bei einem Mikrosystem, bei dem die Signalverarbeitungseinrichtung nur jeweils für eine kurze Zeitdauer im Arbeitsmodus und danach jeweils für eine wesentlich größere Zeitdauer im Ruhemodus betrieben wird, kann dadurch zwar der elektrische Energieverbrauch der Signalverarbeitungseinrichtung gegenüber einer ständig im Arbeitsmodus betrieben Signalverarbeitungseinrichtung deutlich reduziert werden. Da aber der Zeitgeber im Ruhemodus weiterhin betrieben werden muss und einen nicht unerheblichen Betriebsstrom aufweist, ermöglicht die Umschaltung vom Arbeits- in den Ruhemodus insgesamt nur eine begrenzte Stromeinsparung.

Es besteht deshalb die Aufgabe, ein Mikrosystem der eingangs genannten Art zu schaffen, das eine geringe Stromaufnahme und somit einen kompakten Energiespeicher ermöglicht.

Diese Aufgabe wird gelöst durch ein Mikrosystem mit den Merkmalen des Anspruchs 1.

In vorteilhafter Weise wird also die Energie für den Zeitgeber mindestens einem mikromechanischen Cantilever entnommen, so dass für den Betrieb des Zeitgebers praktisch keine elektrische Energie erforderlich ist. Die Stromaufnahme des Mikrosystems reduziert sich dadurch insbesondere im Ruhemodus erheblich. Der elektrische Energiespeicher des Mikrosystems können somit sehr kompakte Abmessungen aufweisen.

Bei einer bevorzugten Ausgestaltung der Erfindung ist der Cantilever an seinem einen Endbereich an einer Halterung fixiert und derart mit seinem anderen Endbereich durch eine abnehmende Oberflächenhaftkraft entgegen der Rückstellkraft seines Werkstoffs gegen einen dem Cantilever zugeordneten Gegenkontakt positioniert, dass er diesen elektrisch kontaktiert. Die an dem Cantilever angreifende Haltekraft nimmt dabei nach dem Positionieren des Cantilevers gegen den Gegenkontakt langsam ab, bis sie schließlich kleiner ist als die Rückstellkraft des Cantilevers, so dass dieser nach Ablauf einer vorbestimmten Zeitdauer betätigt bzw. geöffnet wird.

Bei einer vorteilhaften Ausführungsform der Erfindung weist der Zeitgeber mindestens zwei der Anordnungen, jeweils bestehend aus dem Cantilever und dem ihm zugeordneten Gegenkontakt auf, wobei die Cantilever und die Gegenkontakte derart ausgestaltet und/oder gegeneinander positioniert sind, dass sie zu unterschiedlichen Zeitpunkten voneinander getrennt werden. Dabei ist es sogar möglich, dass das Mikrosystem eine Vielzahl solcher Cantilever aufweist und dass die einzelnen Cantilever beispielsweise im Abstand von etwa einer Minute betätigt werden. Durch die Cantilever kann ein elektrischer Stromkreis geschlossen oder unterbrochen und/oder eine elektrische Kapazität derart verändert werden, dass die Kapazität ein Maß für die Zeit darstellt. In Abhängigkeit von dem Stromfluss in dem Stromkreis und/oder in Abhängigkeit von der Kapazität kann dann die Betriebsartenumschalteinrichtung zum Aktivieren des Arbeitsmodus betätigt werden.

Bei einer bevorzugten Ausgestaltung der Erfindung weisen mindestens zwei der Anordnungen, bestehend aus dem Cantilever und dem Gegenkontakt an der Berührungsstelle von Cantilever und Gegenkontakt eine unterschiedliche Oberflächentopologie auf Die Oberflächentopologien können dabei so gewählt sein, dass die einzelnen Cantilever nach unterschiedlichen Zeitdauern betätigt werden. Unterschiedliche Oberflächentopologien können dadurch erreicht werden, dass die Oberflächen der einzelnen Cantilever und/oder Gegenkontakte bei der Fertigung des Mikrosystems unterschiedlichen physikalischen Behandlungen unterzogen werden. Eine solche physikalische Behandlung kann beispielsweise mindestens einen Ätzschritt, insbesondere einen Plasma-Ätzschritt umfassen. Dabei ist es möglich, die Dauer des Ätzschritts bei den einzelnen Cantilever und/oder Gegenkontakten unterschiedlich zu wählen.

Vorteilhaft ist, wenn bei mindestens einer der aus dem Cantilever und dem ihm zugeordneten Gegenkontakt bestehenden Anordnungen ein gegen den Gegenkontakt positionierter Oberflächenbereich des Cantilevers und/oder ein gegen den Cantilever positionierter Oberflächenbereich des Gegenkontakts Vertiefungen aufweist. Derartige Vertiefungen können bei der Herstellung des Mikrosystems auf einfache Weise lithographisch in den Oberflächenbereich eingebracht werden.

Bei einer vorteilhaften Ausführungsform der Erfindung weisen die Vertiefungen in den Oberflächenbereichen von mindestens zwei Cantilevern und/oder Gegenkontakten unterschiedliche Querschnittsabmessungen auf Dadurch ist es insbesondere möglich, dass die einzelnen Cantilever nach unterschiedlichen Zeitdauern schalten, nachdem sie jeweils gegen den ihnen zugeordneten Gegenkontakt positioniert wurden.

Zweckmäßigerweise sind bei mindestens zwei Cantilevern und/oder mindestens zwei Gegenkontakten die Vertiefungen in den Oberflächenbereichen unterschiedlich angeordnet und weisen insbesondere unterschiedliche Abstände zueinander und/oder eine unterschiedliche Dichte auf Auch durch diese Maßnahme kann die Schaltzeit bei den einzelnen mikromechanischen Cantilevern unterschiedlich eingestellt werden.

Vorteilhaft ist, wenn mindestens zwei Cantilever eine unterschiedliche Federkonstante aufweisen. Dies kann insbesondere dadurch erreicht werden, dass die Querschnittsabmessungen der einzelnen Cantilever unterschiedlich sind. Aufgrund der unterschiedlichen Federkonstanten ergeben sich bei den einzelnen Cantilevern unterschiedlich große Rückstellkräfte, d.h. die Zeitdauer zwischen dem Inkontaktbringen des Cantilevers mit dem ihm zugeordneten Gegenkontakt und dem Öffnen des Cantilevers ist bei den einzelnen Contilevern unterschiedlich.

Der Abstand zwischen dem an der dem Halterung fixierten Endbereich und dem gegen den Gegenkontakt positionierten Endbereich kann bei mindestens zwei Contilevern unterschiedlich sein. Auch durch diese Maßnahme ergibt sich bei den einzelnen Contilevern eine unterschiedliche Zeitdauer zwischen dem Schließen und dem Öffnen des Cantilevers.

Bei einer zweckmäßigen Ausgestaltung der Erfindung weisen mindestens zwei Cantilever und/oder mindestens zwei Gegenkontakte in den Oberflächenbereichen, an denen die Cantilever gegen den ihnen zugeordneten Gegenkontakt positioniert sind, unterschiedliche Werkstoffe auf Als Werkstoffe kommen bevorzugt Silizium, Siliziumnitrid, Siliziumoxide, und Metalle, wie Aluminium und/oder Edelmetalle in Betracht.

Erwähnt werden soll noch, dass die Zeitdauer zwischen dem Schließen und dem Öffnen eines Cantilevers auch durch die Masse des Cantilevers beeinflusst wird und dass die einzelnen Cantilever unterschiedliche Massen aufweisen können. Ferner wird die Zeitdauer durch die Kraft beeinflusst. mit welcher der Cantilever beim Programmieren gegen den Gegenkontakt positioniert wird.

Nachfolgend sind Ausführungsbeispiele der Erfindung anhand der Zeichnung näher erläutert. Es zeigt:
- Fig. 1: eine schematische Darstellung eines einen Mikrocontroller aufweisenden Mikrosystems,
- Fig. 2: einen unprogrammierten Cantilever,
- Fig. 3: einen Cantilever während des Programmierens, und
- Fig. 4 bis 6: Teillängsschnitte durch Cantilever, die unterschiedliche Oberflächenstrukturierungen aufweisen.

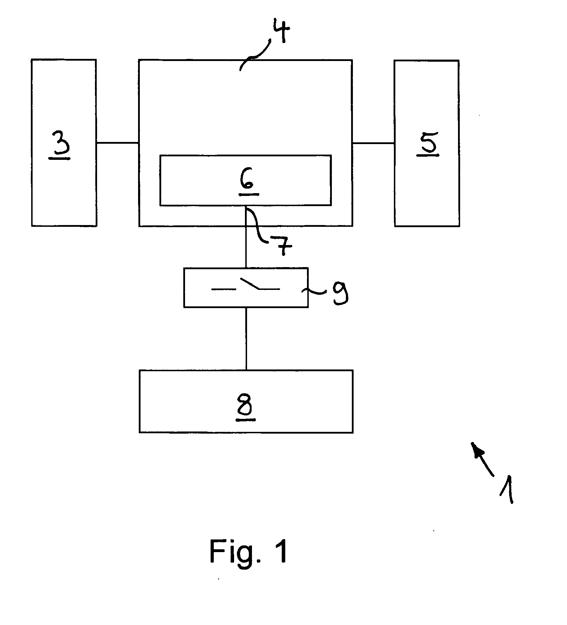

Ein in Fig. 1 im Ganzen mit 1 bezeichnetes Mikrosystem weist auf einem Halbleiterchip 2 einen Sensor 3 zur Erfassung einer physikalischen Größe, wie z.B. der Temperatur und/oder der Luftfeuchtigkeit und eine mit dem Sensor 3 verbundene, als Mikrocontroller ausgestaltete Signalverarbeitungs- und/oder Ansteuereinrichtung 4 auf Stromversorgungsanschlüsse der Signalverarbeitungs- und/oder Ansteuereinrichtung 4 sind an einem elektrischen Energiespeicher 5, wie zum Beispiel einer Mikrobatterie oder einem Akku angeschlossen.

Die Signalverarbeitungs- und/oder Ansteuereinrichtung 4 hat eine Betriebsartenumschalteinrichtung 6, mittels der sie in einen Arbeitsmodus und einen Ruhemodus bringbar ist. Im Arbeitsmodus wird der Sensor 3 in Abhängigkeit von einem in der Signalverarbeitungs- und/oder Ansteuereinrichtung 4 ablaufenden Betriebsprogramm derart angesteuert, dass er an einem Messsignalausgang ein elektrisches Messsignal bereitstellt. Das Messsignal wird an einen Messsignaleingang der Signalverarbeitungs- und/oder Ansteuereinrichtung 4 angelegt und in der Signalverarbeitungs- und/oder Ansteuereinrichtung 4 verarbeitet. Die Signalverarbeitung kann beispielsweise eine Filteroperation und/oder eine Überprüfung des Messsignals auf Plausibilität umfassen. Ein durch die Signalverarbeitung erhaltener Messwert wird in einem Datenspeicher abgelegt, der in den Halbleiterchip 2 integriert ist.

Sobald ein Messwerterfassungszyklus durchlaufen ist, wird die Betriebsartenumschalteinrichtung 6 durch das Betriebsprogramm in den Ruhemodus umgeschaltet. Im Ruhemodus sind der Sensor 3 und Teile der Signalverarbeitungs- und/oder Ansteuereinrichtung 4 abgeschaltet, so dass die Signalverarbeitungs- und/oder Ansteuereinrichtung 4 dann nur eine sehr geringe Stromaufnahme aufweisen.

Die Messwerterfassung und -verarbeitung wird jeweils nach einer vorgegebenen Zeitdauer zyklisch wiederholt. Die Betriebsartenumschalteinrichtung 6 hat dazu einen Steuersignaleingang 7, der zum Anlegen eines Betriebsartenumschaltsignals mit einem verstellbaren elektrischen Element 9 verbunden ist. Das elektrische Element 9 wird durch einen mikromechanischen Zeitgeber 8 jeweils nach Ablauf der vorgegebenen Zeitdauer verstellt, um die Signalverarbeitungs- und/oder Ansteuereinrichtung 4 aufzuwecken.

Der Zeitgeber 8 weist als mechanischen Energiespeicher eine Vielzahl von Cantilevern 10 auf, die das elektrische Element 9 steuern. Jeder Cantilever 10 ist an seinem einen Endbereich an dem Halbleiterchip 2 befestigt, beispielsweise über eine Bondstelle. An seinem von diesem Endbereich entfernten freien Endbereich ist der Cantilever 10 jeweils entgegen der Rückstellkraft seines Werkstoffs durch eine Oberflächenhaflkraft gegen einen Gegenkontakt 11 positioniert.

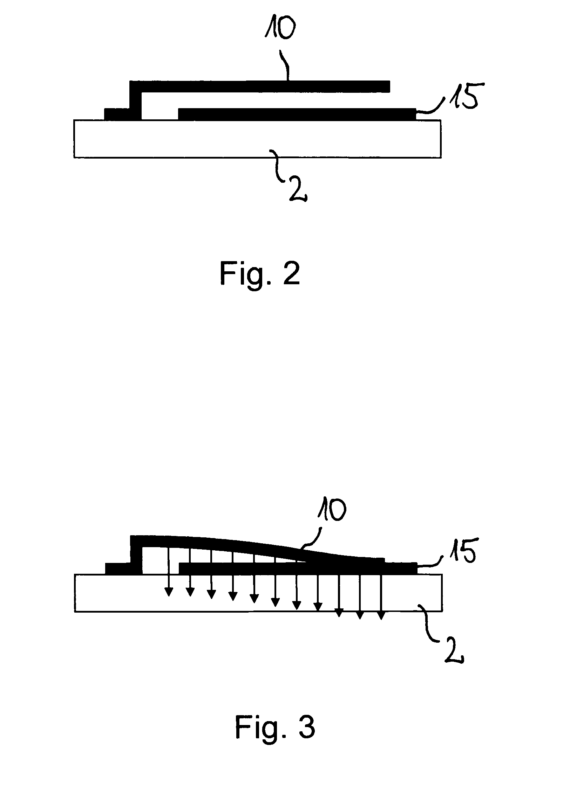

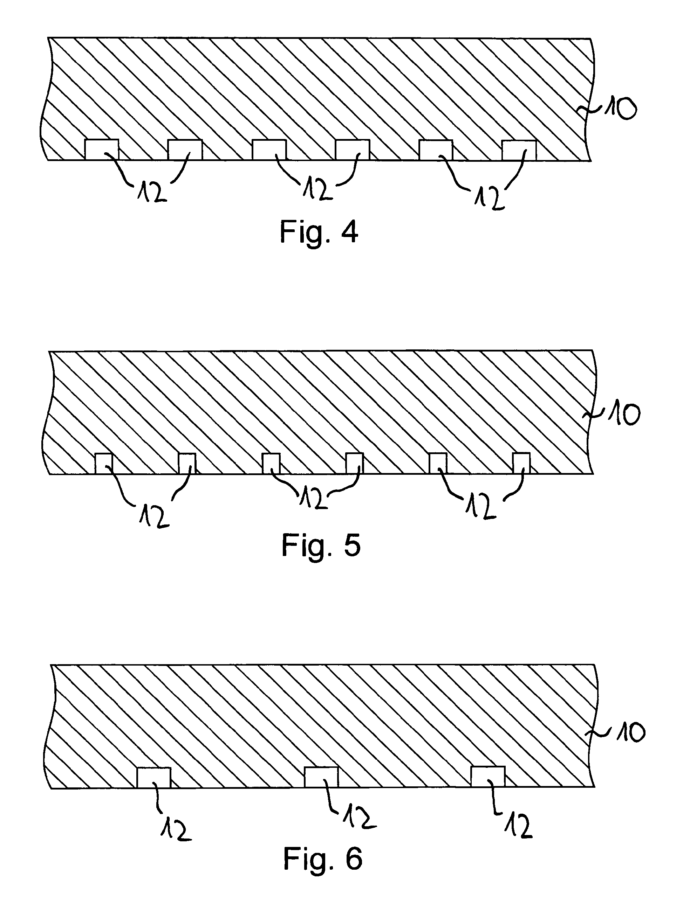

Die Oberflächenhaftkraft wird durch eine in Fig. 4 bis 6 nur schematisch dargestellte Oberflächenstrukturierung der aneinander anliegenden Oberflächenbereiche des Cantilevers 10 und/oder des Gegenkontakts 11 beeinflusst. Nach dem Inkontaktbringen des Cantilevers 10 mit dem Gegenkontakt 11 nimmt die Oberflächenhaftkraft jeweils langsam ab. Sobald die Oberflächenhaftkraft geringer ist als die Rückstellkraft des Cantilevers 10, entspannt sich der Cantilever 10 und verschwenkt aus der Schließstellung (Fig. 3) in die Offen- oder Ruhestellung (Fig. 2).

In Fig. 4 bis 6 ist erkennbar, dass die Oberflächenstrukturierung der Cantilever 10 Vertiefungen 12 aufweist, die bei den einzelnen Cantilevern 10 unterschiedliche Querschnittsabmessungen aufweisen und/oder in interschiedlichen Abständen zueinander angeordnet sind. Durch die Vertiefungen 12 reduziert sich jeweils die an dem Gegenkontakt 11 anliegende Oberfläche des Cantilevers 10 und somit die Zeitdauer, die der Cantilever 10 nach dem Inkontaktbringen mit dem Gegenkontakt 11 benötigt, um in seine Ruhelage (Fig. 2) zurückzukehren.

Über die einzelnen Cantilever 10 ist jeweils eine elektrische Spannung an einen Steuersignaleingang 7 der Betriebsartenumschalteinrichtung 6 anlegbar. Bei jeder Änderung des an die Steuereingänge 7 angelegten Spannungsmusters wird die Signalverarbeitungs- und/oder Ansteuereinrichtung 4 aus dem Ruhemodus aufgeweckt, um einen Messwert zu erfassen und in dem Datenspeicher abzulegen.

Bei der Herstellung des Mikrosystems 1 werden die Cantilever 10 mit Hilfe einer Programmierspannung, die zwischen dem Cantilever 10 und dem Gegenkontakt 11 angelegt wird, aus der Offenstellung (Fig. 2) derart in die Schließstellung (Fig. 3) gebracht, dass sie nach dem anschließenden Entfernen der Programmierspannung für eine vorbestimmte Zeitdauer in der Schließstellung verbleiben und sich danach selbständig in die Offenstellung verstellen. Die Programmierspannung wird so hoch eingestellt, dass die Kraft, die durch das zwischen dem Cantilever 10 und dem Gegenkontakt 11 befindliche, in Fig. 3 durch Pfeile dargestellte elektrische Feld auf den Cantilever 10 bzw. den Gegenkontakt 11 ausgeübt wird, größer ist als die Rückstellkraft des Cantilevers 10.

## Patentansprüche

1. Mikrosystem (1), bestehend zumindest aus wenigstens einem Sensor (3) und/oder Aktuator, einer damit verbundenen Signalverarbeitungs- und/oder Ansteuereinrichtung (4), einem Zeitgeber (8) und einem elektrischen Energiespeicher (5) zur Stromversorgung zumindest der Signalverarbeitungs- und/oder Ansteuereinrichtung (4), wobei die Signalverarbeitungs- und/oder Ansteuereinrichtung (4) eine Betriebsartenumschalteinrichtung (6) aufweist, mittels der sie in einen Arbeitsmodus und einen Ruhemodus mit gegenüber dem Arbeitsmodus reduzierter Stromaufnahme bringbar ist, und wobei die Betriebsartenumschalteinrichtung (6) mindestens einen Steuersignaleingang (7) aufweist, der zum Anlegen eines Betriebsartenumschaltsignals mit dem Zeitgeber (8) elektrisch verbunden ist, **dadurch gekennzeichnet, dass** der Zeitgeber (8) ein mechanischer Zeitgeber (8) ist, der mindestens einen mikromechanischen Cantilever (10) aufweist, der derart mit wenigstens einem, mit dem mindestens einen Steuersignaleingang (7) der Signalverarbeitungs- und/oder Ansteuereinrichtung (4) verbundenen elektrischen Element (9) gekoppelt ist, dass dieses zeitabhängig verstellt wird.

2. Mikrosystem (1) nach Anspruch 1, **dadurch gekennzeichnet, dass** der Cantilever (10) an seinem einen Endbereich an einer Halterung fixiert und mit seinem anderen Endbereich derart durch eine abnehmende Oberflächenhaftkraft entgegen der Rückstellkraft seines Werkstoffs gegen einen dem Cantilever (10) zugeordneten Gegenkontakt (11) positioniert ist, dass er diesen elektrisch kontaktiert.

3. Mikrosystem (1) nach Anspruch 1 oder 2, **dadurch gekennzeichnet, dass** der Zeitgeber (8) mindestens zwei der Anordnungen, jeweils bestehend aus dem Cantilever (10) und dem ihm zugeordneten Gegenkontakt (11) aufweist, und dass die Cantilever (10) und die Gegenkontakte (11) derart ausgestaltet und/oder gegeneinander positioniert sind, dass sie zu unterschiedlichen Zeitpunkten voneinander getrennt werden.

4. Mikrosystem (1) nach einem der Ansprüche 1 bis 3, **dadurch gekennzeichnet, dass** mindestens zwei der Anordnungen, bestehend aus dem Cantilever (10) und dem Gegenkontakt (11) an der Berührungsstelle von Cantilever (10) und Gegenkontakt (11) eine unterschiedliche Oberflächentopologie aufweisen.

5. Mikrosystem (1) nach einem der Ansprüche 1 bis 4, **dadurch gekennzeichnet, dass** bei mindestens einer der aus dem Cantilever (10) und dem ihm zugeordneten Gegenkontakt (11) bestehenden Anordnungen ein gegen den Gegenkontakt (11) positionierter Oberflächenbereich des Cantilevers (10) und/oder ein gegen den Cantilever (10) positionierter Oberflächenbereich des Gegenkontakts (11) Vertiefungen (12) aufweist.

6. Mikrosystem (1) nach einem der Ansprüche 1 bis 5, **dadurch gekennzeichnet, dass** die Vertiefungen (12) in den Oberflächenbereichen von mindestens zwei Cantilevern (10) und/oder Gegenkontakten (11) unterschiedliche Querschnittsabmessungen aufweisen.

7. Mikrosystem (1) nach einem der Ansprüche 1 bis 6, **dadurch gekennzeichnet, dass** bei mindestens zwei Contilevern (10) und/oder mindestens zwei Gegenkontakten (11) die Vertiefungen (12) in den Oberflächenbereichen unterschiedlich angeordnet sind und insbesondere unterschiedliche Abstände zueinander und/oder eine unterschiedliche Dichte aufweisen.

8. Mikrosystem (1) nach einem der Ansprüche 1 bis 7, **dadurch gekennzeichnet, dass** mindestens zwei Cantilever (10) eine unterschiedliche Federkonstante aufweisen.

9. Mikrosystem (1) nach einem der Ansprüche 1 bis 8, **dadurch gekennzeichnet, dass** der Abstand zwischen dem an der dem Halterung fixierten Endbereich und dem gegen den Gegenkontakt (11) positionierten Endbereich bei mindestens zwei Contilevern (10) unterschiedlich ist.

10. Mikrosystem (1) nach einem der Ansprüche 1 bis 9, **dadurch gekennzeichnet, dass** mindestens zwei Cantilever (10) und/oder mindestens zwei Gegenkontakte (11) in den Oberflächenbereichen, an denen die Cantilever (10) gegen den ihnen zugeordneten Gegenkontakt (11) positioniert sind, unterschiedliche Werkstoffe aufweisen.

11. Mikrosystem (1) nach einem der Ansprüche 1 bis 9, **dadurch gekennzeichnet, dass** der Sensor (3) und/oder Aktuator, die Signalverarbeitungs- und/oder Ansteuereinrichtung (4) und der mechanischer Zeitgeber (8) in einen Halbleiterchip (2) integriert sind.
